## Europäisches Patentamt

## European Patent Office

## Office européen des brevets

(11) Veröffentlichungsnummer: **0 055 364**
**B2**

(12) # NEUE EUROPÄISCHE PATENTSCHRIFT

(45) Veröffentlichungstag der neuen Patentschrift:
27.04.88

(51) Int. Cl.⁴: **B 60 R 19/34**

(21) Anmeldenummer: **81108958.0**

(22) Anmeldetag: **27.10.81**

(54) **Crash-Schutz-Bauteil.**

(30) Priorität: **30.12.80 DE 3049425**

(43) Veröffentlichungstag der Anmeldung:
**07.07.82 Patentblatt 82/27**

(45) Bekanntmachung des Hinweises auf die Patenterteilung:
**25.07.84 Patentblatt 84/30**

(45) Bekanntmachung des Hinweises auf die Entscheidung
über den Einspruch:
**27.04.88 Patentblatt 88/17**

(84) Benannte Vertragsstaaten:
**FR GB IT SE**

(56) Entgegenhaltungen:
**EP-A-0 053 284**
**DE-A-2 616 359**
**DE-A-2 636 696**
**DE-A-2 918 280**
**DE-B-1 298 010**

**Die Akte enthält technische Angaben, die nach
dem Eingang der Anmeldung eingereicht wurden
und die nicht in dieser Patentschrift enthalten sind.**

(73) Patentinhaber: **Messerschmitt- Bölkow- Blohm
Gesellschaft mit beschränkter Haftung, Robert-
Koch- Strasse, D-8012 Ottobrunn (DE)**

(72) Erfinder: **Bongers, Bernd, Dipl.- Ing., Nelkenweg 2,
D-8011 Kirchheim (DE)**

EP 0 055 364 B2

LIBER, STOCKHOLM 1988

**Beschreibung**

Die Erfindung betrifft ein Crash (Aufprall)-Schutz-Bauteil nach dem Oberbegriff des Anspruchs 1.

Im Kraftfahrzeug-Bau werden seit langem zur Aufnahme von Energie im Crash-Fall ((Unfall-) Aufprall) Bauteile benötigt, die Energie bei geringer Belastung reversibel, jedoch bei größer werdender Belastung irreversibel aufnehmen, zumindest derart, daß die Energie nicht unmittelbar nach ihrer Aufnahme wieder abgegeben wird.

Derartige Bauteile sind z. B. zur Abstützung der Stoßstange gegenüber den tragenden Karosseriestrukturen oder auch im Bereich der - fast immer vorhandenen - vorderen Längsträger, die im Crash-Fall einen großen Anteil an der Energie-Aufnahme haben, erforderlich.

Maßgebend für diese Energie-Aufnahme ist die Größe des Integrals

$$\int F \cdot ds$$

mit F = Kraft, s = Weg,

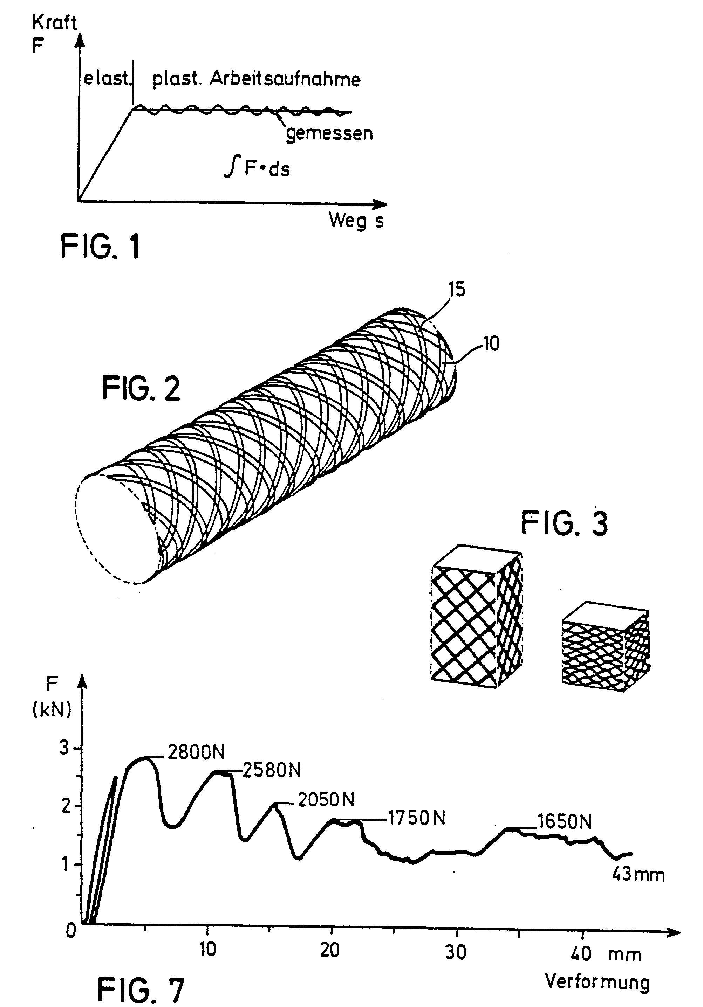

d. h. die Fläche, die im Kraft-Weg-Diagramm eines derartigen Bauteils von der Kraft-Kurve und der Weg-Achse eingeschlossen ist, vgl. dazu die idealisierte Fig. 1. Diese Fläche, vor allem der Abschnitt hoher plastischer Arbeitsaufnahme, soll möglichst groß sein, d. h. konstante Kraft bei zunehmendem Weg zeigen.

Die bisher bekannten derartigen Bauteile beruhen wahlweise auf zwei verschiedenen, bereits seit langem bekannten Prinzipien:

- hydraulischer Dämpfung, d. h. kinetische Aufprall-Energie wird in Reibung und dann in Wärme umgewandelt, ggf. mit Kügelchen statt Flüssigkeit (vgl. z. B. FR-PS 617 230, DE-PS 468 279), und

- Verformung eines metallischen Werkstoffes über die Proportionalitätsgrenze hinaus, so daß die sich anschließende plastische Verformung zur irreversiblen Energie-Aufnahme dient; ausgeführt z. B. als Wellrohr, als Trägerabschnitt in Form eines Stahlblechs oder aus einem Gitterrohr, das ab einer bestimmten Druckbelastung zusammengedrückt wird (vgl. z. B. DE-A-26 36 696 und DE-B-1 298 010).

Alle diese bekannten Bauteile sind mit wesentlichen Nachteilen behaftet:

- Relativ hohes Gewicht, das zwangsläufig den Kraftstoffverbrauch erhöht und zur stärkeren Abnutzung der Straßenbeläge beiträgt;

- Aufwendige Fertigung und große Störanfälligkeit:

- Die Bauteile in der Art hydraulischer Dämpfer besitzen viele, störanfällige Elemente, insbesondere Kolben, Zylinder, Führungen, Ventile usw.,

- die Bauteile aus metallischem Werkstoff (Stahlblech) wie Wellrohre oder Falt-Bleche müssen durch komplizierte Tiefzieh- oder sonstige Verformungsprozesse hergestellt werden, die zudem meist sehr energieaufwendig wegen hoher Temperaturen und hoher Preßdrücke zum Erweichen bzw. Verformen des Werkstoffs sind; auch hier ist zusätzlich eine Störanfälligkeit durch mögliche Korrosion des Stahlblechs gegeben.

Aus der DE-A-2 918 280 ist ein Crash-Schutzbauteil gemäß dem Oberbegriff des Anspruchs 1 bekannt. Die Mantelfläche wird dabei durch ein Vollmantelrohr gebildet. Damit das Vollmantelrohr bei der im Crashfall auftretenden Belastung bricht und Energie absorbiert, ist ein Amboß erforderlich, welcher eine Gegenfläche aufweist, auf der sich das Vollmantelrohr mit seiner Stirnfläche abstützt. Durch den Amboß wird das bekannte Crash-Schutzbauteil jedoch beträchtlich schwerer, aufwendiger herstellbar und störanfälliger, z. B. wenn der Amboß und das Vollmantelrohr nicht genau aufeinander ausgerichtet sind.

Demgegenüber ist es Aufgabe der Erfindung, ein Crash-Schutz-Bauteil der eingangs genannten Art schaffen, das bei zumindest gleicher Energie-Aufnahme beträchtlich leichter, beträchtlich einfacher erstellbar und zudem störsicherer ist.

Die Lösung dieser Aufgabe erfolgt erfindungsgemäß durch die Lehre nach dem Kennzeichen des Anspruchs 1.

Mit besonderen Ausführungsformen der Erfindung können folgende Vorteile erzielt werden:

- Die Gewichtseinsparung beträgt größenordnungsmäßig einen Faktor 4, da Faserverbundwerkstoffe um so viel leichter als Stahl sind;

- zur Herstellung wird grundsätzlich die für sich seit langem bekannte Filament-Winding-Technik (Roving-Wickel-Technik) angewendet, "Roving", ist dabei ein Bündel von Endlos-Fasern, das mit Kunstharz ("Matrix") getränkt wird (vgl. Schwarz; Glasfaserverstärkte Kunststoffe; Vogel Verlag, Würzburg, 1975; Rosato, D.V; Grore, C.S; Filament Winding; London, Wiley and Sons, 1964; Selden, P.H; Glasfaserverstärkte Kunststoffe; Heidelberg, Springer, 1967; diese Wickeltechnik ist bereits seit vielen Jahren in der Praxis gut erprobt und auch gut zur automatischen, beliebig einstellbaren Durchführung geeignet; bisher wurde sie allerdings nur zur Herstellung von allseitig geschlossenen, druckdichten Hohlkörpern (also auch mit geschlossener Mantelfläche) eingesetzt, während erfindungsgemäß der oder die FVW-Stränge aufeinander abgelegt gewickelt werden, also ohne Fortschrittsgrad um das offene Netz-Werk zu bilden;

- die Faserverbundwerkstoffe sind außerordentlich korrosionsfest, so daß Störfälle praktisch denkbar sind; und

- große Anpassungsmöglichkeiten der Energie-Aufnahme durch entsprechende, leicht vorzuhmende Wahl der Werkstoff- und der Konstruktions-Parameter des Bauteils.

Vorteilhafte Ausgestaltungen der Erfindung sind in den Unteransprüchen angegeben:

- Die Ansprüche 2-4 nennen im einzelnen bevorzugte Parameter zur genauen Einstellung der erwünschten Verformungs- und damit Energie-Aufnahme-Eigenschaften;
- die Lehre nach dem Anspruch 4 ist besonders vorteilhaft, weil dieser Faserverbundwerkstoff im Vergleich zu anderen Werkstoffen z. B. mit Kohlenstoff-Fasern bedeutend kostengünstiger, aber auch in der Anfangsphase der Druckbelastung bedeutend elastischer, also eher für eine reversible Energie-Aufnahme geeignet ist.

Die einschlägigen Parameter des Netz-Werks werden zweckmäßigerweise so gewählt, daß möglichst große Bereiche des Netz-Werks auf Scherung bzw. Schub belastet werden. Dafür bieten sich verschiedene Möglichkeiten an:

- Nach der Lehre des Anspruchs 2 mit dem beispielhaften Wert zehn können die schubbelasteten Flächen innerhalb jedes Knotenpunkts vermehrt werden. In den Knotenpunkten liegen nämlich jeweils die FVW-Strang-Lagen abwechselnd mit $+\alpha$- und $\alpha$-Neigungswinkel zur Bauteil-Längsachse aufeinander, wobei diese Lagen durch einen einzigen oder auch durch mehrere FVW-Stränge gebildet sein können (mehrere Stränge werden sich z. B. empfehlen, wenn das Wickeln besonders schnell erfolgen soll, da dann diese mehreren Stränge gleichzeitig aufgewickelt werden). D. h. je mehr bei vorgegebenem Gesamtquerschnitt eines Knotenpunkts dieser in einzelne dünnere Strang-Lagen aufgeteilt ist, umso mehr Schubflächen, nämlich Lagen-Grenzflächen, sind vorhanden, die bei Längsbelastung des Bauteils auf Schub belastet werden, da die aufeinanderliegenden einzelnen Strang-Lagen mit $+\alpha$- und $-\alpha$-Neigungswinkel zur Bauteil-Längsachse sich gegeneinander zu verdrehen versuchen;

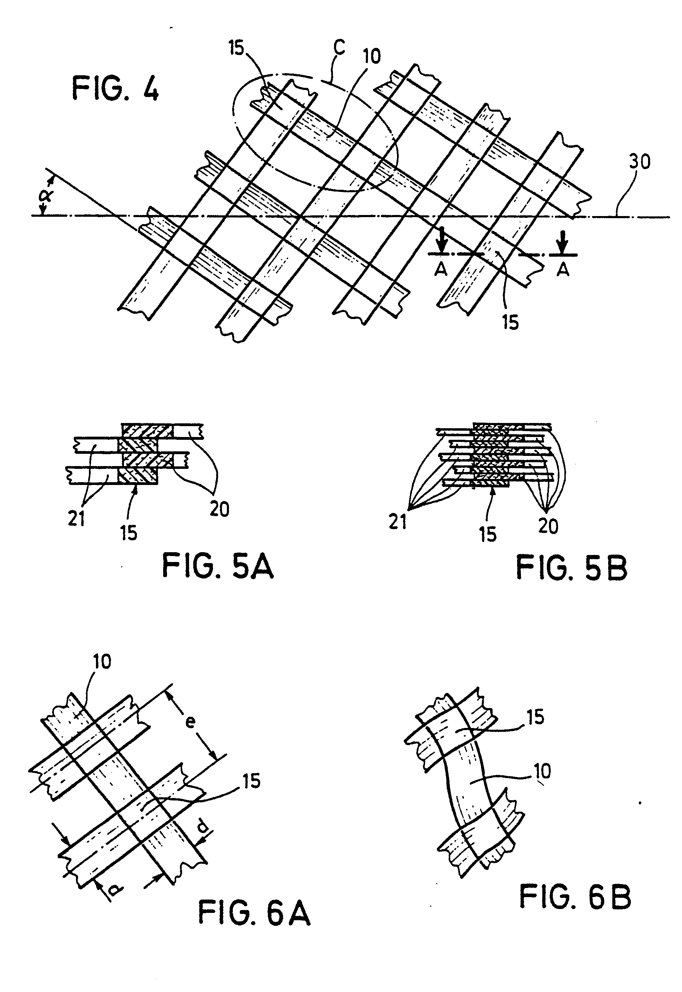

Durch die Strangbreite in der Größenordnung des gegenseitigen Abstandes der Knotenpunkte wird sichergestellt, daß bei Längsbelastung des gesamten Bauteils die Anteile des Netz-Werks zwischen je zwei Knotenpunkten (also die "Einzel-Stäbe" in der Sprache der Statik) - bei Wahl nicht gerade ungeeigneter Neigungswinkel der Strang-Lagen zur Bauteil-Längsachse - im wesentlichen auf Biegung belastet werden, so daß kurze und bezüglich der Biegemomentwirkung dicke Biegestäbe entstehen, die einen hohen Anteil an Schubbelastung haben (vgl. dazu auch weiter unten Fig. 6a, b);

- nach der Lehre des Anspruchs 5 ist der Neigungswinkel so gewählt, daß bei Längsbelastung des Bauteils die "Einzel-Stäbe" zwischen zwei Knotenpunkten auf jeden Fall überwiegend auf Biegung belastet werden.

Bei seiner Längsbelastung erfolgt zunächst eine elastische (reversible) Verformung, bei der in den Strängen und in den Knotenpunkten auch Schubspannungen auftreten. Wird nun mit zunehmender Belastung die Schubfestigkeit des Laminats der Strang-Lagen in den Knotenpunkten und von Fasern und Matrix in den FVW-Strang-Lagen selbst überschritten, so erfolgt ein fortschreitendes "Delaminieren" des Bauteils in den Strang-Lagen und Knotenpunkten, so daß sich das Bauteil weiter zusammendrücken läßt und dabei irreversibel Energie aufnimmt, also bleibend verformt wird.

Das erfindungsgemäße Bauteil ist nicht nur in der eigentlichen Kfz-Technik, sondern überall dort anwendbar, wo eine Energie-Aufnahme erforderlich ist, z. B. auch als Crash-Schutz für Fluggerät.

Obwohl vorzugsweise das erfindungsgemäße Bauteil ein Kreiszylindrisches Netz-Werk ("Netz-Rohr") darstellt, da es sich bei der Herstellung besonders leicht auf einen kreiszylindrischen Wickel-Dorn aufwickeln läßt, sind ohne weiteres auch andere Querschnitte möglich, z. B. ein Rechteckquerschnitt, vgl. dazu weiter unten Fig. 3.

Anhand der Zeichnung wird die Erfindung beispielsweise näher erläutert. Es zeigen:

Figur 1 ein idealisiertes (angestrebtes) Kraft-Weg-Diagramm für Crash-Schutz-Bauteile;

Figur 2 ein zylindrisches Bauteil gemäß der Erfindung ("Netz-Rohr") in perspektivischer Ansicht;

Figur 3 ein quaderförmiges Bauteil gemäß der Erfindung vor und nach einem Crash in perspektivischer Ansicht;

Figur 4 ausschnittsweise in Draufsicht die Mantelfläche eines erfindungsgemäßen Bauteils;

Figuren 5a, b einen Schnitt A-A von Fig. 4;

Figuren 6a, b eine Einzelheit C von Fig. 4 vor und nach einem Crash; und

Fig. 7 ein reales Kraft-Weg-Diagramm (ähnlich Fig. 1), das mit einem Versuchs-Bauteil gemäß der Erfindung aufgenommen worden ist.

Auf Fig. 1 ist bereits eingangs eingegangen worden.

Das in Fig. 2 abgebildete Ausführungsbeispiel des erfindungsgemäßen Bauteils kann kurz mit "Netz-Rohr" charakterisiert werden. Es besteht aus einem Faserverbundwerkstoff (FVW)-Strang 10, der in mehreren Lagen übereinander ohne Fortschrittsgrad aufgewickelt worden ist. Diese Strang-Lagen sind je nach Wickelsinn in positiver oder in negativer Richtung zur Bauteil-Längsachse 30 geneigt, vgl. dazu auch Fig. 4, d. h., in Fig. 4 entweder von links oben nach rechts unten oder von rechts oben nach links unten.

Während aus Fig. 2 und Fig. 4 die Anzahl der Strang-Lagen nicht ersichtlich ist, bringen dafür Fig. 5a und b Beispiele, wobei die Strang-Lagen mit positivem Neigungswinkel $\alpha$ zur Bauteil-Längsachse 3 mit 20 und die mit negativem Neigungswinkel $\alpha$ mit 21 angedeutet sind.

Die im Schnitt A-A von Fig. 4 angedeuteten Knotenpunkte 15 gemäß Fig. 5a und b besitzen im wesentlichen die gleiche Gesamtdicke, unterscheiden sich jedoch in der Anzahl der Strang-Lagen 20 und 21, die vier bzw. zehn beträgt. Dieser Unterschied wird durch unterschiedliche Wahl der Dicke des zum Aufwickeln verwendeten Strangs 10 erreicht. Im Fall von Fig. 5b wird zwar öfters als bei Fig. 5a gewickelt, dafür bringt die größere Anzahl der Strang-Lagen 20 und 21 den Vorteil einer größeren Anzahl von Schubflächen mit sich, so daß die irreversible Energie-Aufnahme gegenüber dem Ausführungsbeispiel von Fig. 5a gesteigert wird, wie schon eingangs erklärt worden ist.

Das Ausführungsbeispiel von Fig. 6a besitzt ähnlich wie das Ausführungsbeispiel von Fig. 4 ein Verhältnis von Strang-Breite d zu gegenseitigem Abstand e der Knotenpunkte 15 des Netz-Werks gleich 0,5, was bei der Biegung dieses Bauteils einen hohen Schubanteil verleiht, wie ebenfalls eingangs erläutert worden ist; vgl. dazu auch die Darstellung in Fig. 6b nach dem Crash.

Fig. 3 zeigt ein Ausführungsbeispiel des erfindungsgemäßen Bauteils mit Rechteckquerschnitt vor und nach dem Crash, woraus unmittelbar die Verformung des Netz-Werks ersichtlich ist.

Es wurde ein kreiszylindrisches Versuchs-Bauteil (ähnlich Fig. 2) mit folgenden Parametern gefertigt:

Innendurchmesser: 44 mm
Länge: ca. 150 mm
FVW-Werkstoff: 800 er E-Glas-Roving, getränkt mit Epoxid-Harz
Netz-Werk; 8-fach-Muster ohne Fortschrittsgrad
        6 Strang-Lagen
        Lagen-Neigungswinkel $\alpha$ zur Bauteil-Längsachse = 52°
        Strang-Breite (d)/Knotenpunkts-Abstand (e) = 0,5
Gewicht: ca. 35 g.

Mit diesem Versuchs-Bauteil wurde das Kraft-Weg-Diagramm von Fig. 7 aufgenommen: Nach einer elastischen Verformung (ganz am Anfang, vgl. die, "Spitze") erfolgte noch eine weit größere plastische Verformung, bei der irreversibel sehr viel Energie aufgenommen wurde.

**Patentansprüche**

1. Crash(Aufprall)-Schutz-Bauteil zur Abstützung einer Stoßstange gegenüber den tragenden Karosseriestrukturen oder dergleichen, welches einen Hohlkörper aufweist, dessen Mantelfläche durch die Filament-Winding-Technik aus mindestens einem Faserverbundwerkstoff (FVW)-Strang (10) hergestellt ist und welches durch Delaminieren irreversibel Energie aufnimmt, dadurch gekennzeichnet, daß die Mantelfäche durch ein offenes Netzwerk gebildet wird, in dem die Filament-Winding-Technik (Roving-Wickel-Technik) ohne Fortschrittsgrad durchgeführt wird, so daß ein stehendes Muster entsteht, wobei der FVW-Strang (10) eine Breite (d) in der Größenordnung des gegenseitigen Abstandes (e) der Knotenpunkte (15) des Netzwerks besitzt, so daß die FVW-Strang-Lagen (20, 21) an ihren gegenseitigen Knotenpunkten (15) des Netz-Werks delaminieren.

2. Bauteil nach Anspruch 1, dadurch gekennzeichnet, daß jeder Knotenpunkt (15) durch ca. 10 FVW-Strang-Lagen (20, 21) gebildet ist.

3. Bauteil nach Anspruch 1 oder 2, dadurch gekennzeichnet, daß der FVW-Strang (10) unter einem Winkel ($\alpha$) von ca. 30 - 60° gegen die Bauteil-Längsachse (30) geneigt ist.

4. Bauteil nach einem der vorhergehenden Ansprüche, dadurch gekennzeichnet, daß der FVW-Strang (10) aus Glas-Roving, getränkt mit Epoxid-Harz, besteht.

**Claims**

1. A crash (impact) protection component for supporting a bumper relative to its supporting bodywork structure or the like, which comprises a hollow body the jacket surface of which is produced by the filament winding technique from at least one composite fibre material (CFM) strand (10) and which by delamination irreversibly absorbs energy, characterised in that the jacket surface is formed by an open network in which the filament winding technique (roving winding technique) is performed without progression pitch, so that a fixed pattern arises, in which respect the CFM strand (10) possesses a width (d) of the order of magnitude of the mutual spacing (e) of the junction points (15) of the network, so that the CFM strand layers (20, 21) delaminate at their mutual junction points (15) of the network.

2. A component according to claim 1, characterised in that each junction point (15) is formed by about 10 CFM strand layers (20, 21).

3. A component according to claim 1 or 2, characterised in that the CFM strand (10) is inclined at an angle ($\alpha$) of about 30 - 60° towards the longitudinal axis of the component.

4. A component according to one of the preceding claims, characterised in that the CFM strand (10) consists of glass roving, impregnated with epoxy resin.

**Revendications**

1. Elément de construction protégeant contre les chocs pour soutenir un pare-choc vis-à-vis des structures portantes de la carrosserie ou analogues, comportant un corps creux dont la surface latérale est réalisée par la technique d'enroulement des filaments à partir d'au moins un matériau composite fibreux, écheveau (MCF) (10) et qui absorbe de façon irréversible l'énergie par décollement interlamellaire, caractérisé par le fait que la surface latérale est formée par un réseau ouvert dans lequel la technique d'enroulement des filaments (technique d'enroulement des stratifils de verre textile) est exécutée sans argument de similitude d'hélice, de sorte qu'il en résulte un dessin fixe, l'écheveau (MCF) (10) ayant une largeur (d) de l'ordre de grandeur de la distance réciproque (e) entre les points nodaux (15) du réseau, si bien que les couches d'écheveaux (MCF) (20, 21) subissent un décollement interlamellaire au niveau de leurs points nodaux réciproques (15) du réseau.

2. Elément de construction selon la revendication 1, caractérisé par le fait que chaque point nodal (15) est formé par environ dix couches d'écheveaux (MCF) (20, 21).

3. Elément de construction selon la revendication 1 ou 2, caractérisé par le fait que l'echeveau (MCF) (10) est incliné sous un angle (α) d'environ (30-60°) par rapport à l'axe longitudinal (30) de l'élément de construction.

4. Elément de construction selon l'une des revendications précédentes, caractérisé par le fait que l'écheveau (MCF) (10) est réalisé en stratifils de verre textile imprégnés de résine époxy.

**FIG. 1**

**FIG. 2**

**FIG. 3**

**FIG. 7**

FIG. 4

FIG. 5A

FIG. 5B

FIG. 6A

FIG. 6B